# EUROPÄISCHE PATENTANMELDUNG

(11) **EP 4 789 909 A1**
(43) Veröffentlichungstag der Anmeldung: **12.08.2026**
(21) Anmeldenummer: 25224836.4
(22) Anmeldetag: 18.12.2025
(51) Int. Cl.: B60N 2/015, B64D 11/06

(54) **VORRICHTUNG ZUM ZEITWEILIGEN VERBINDEN EINES BEWEGBAREN GEGENSTANDES MIT EINER HALTESCHIENE**

(30) Priorität: 11.02.2025 DE 102025104917
(71) Anmelder: Georg Fischer Metallverarbeitung GmbH, 89233 Neu-Ulm (DE)
(72) Erfinder: Fischer, Thomas, 89231 Neu-Ulm (DE)
(74) Vertreter: Sawodny, Michael-Wolfgang

(57) **Zusammenfassung**

Die Erfindung umfasst eine Vorrichtung zum zeitweiligen Verbinden eines bewegbaren Gegenstandes, insbesondere eines Fahrzeugsitzes, mit einer Längsnuten aufweisenden Halteschiene wobei die Vorrichtung wenigstens eine axial verschiebbare Arretiervorrichtung und wenigstens eine axial verschiebbare Spannvorrichtung, die in Abstand zur Arretiervorrichtung angeordnet ist, zum Eingriff in die Halteschiene aufweist und die Arretiervorrichtung und die Spannvorrichtung durch eine Hebeleinrichtung, insbesondere einen Hebelarm gemeinsam axial verstellbar sind. Die Erfindung ist dadurch gekennzeichnet, dass die Hebeleinrichtung derart ausgestaltet ist, dass diese mit einer Einhandbedienung verriegelt und/oder entriegelt und/oder verschoben werden kann.

## Beschreibung

Die Erfindung betrifft eine Vorrichtung zum zeitweiligen bzw. temporären Verbinden eines bewegbaren Gegenstandes, insbesondere eines Fahrzeugsitzes, der bevorzugt auf einem Stuhlfuß montiert ist, mit einer Halteschiene.

Vorrichtungen zur temporären Befestigungen eines bewegbaren Gegenstandes, insbesondere eines Fahrzeugsitzes, bspw. angeordnet auf einem Stuhlfuß, in einer Halteschiene sind aus einer Vielzahl von Anmeldungen bekannt geworden.

So zeigt die EP 1790521 A1 eine verstellbare Sitzhalterung, bei der lediglich ein axial verstellbarer Arretierbolzen mit Hilfe einer Hebeleinrichtung abgesenkt werden kann. Durch das Absenken des bzw. der Arretierbolzen in der EP 1 790 521 A1 wird eine Doppelfunktion übernommen. Zum einen greift der Arretierbolzen in eine entsprechende Arretieröffnung der Bodenschiene ein und sorgt für eine genaue Positionierung, zum anderen werden durch den Arretierbolzen die an der Unterseite der Fußplatte vorstehenden Führungsbolzen nach oben gezogen.

Ein Spannbolzen wird in der EP 1 790 521 A1 nicht gezeigt, lediglich ein Arretierbolzen mit einer Doppelfunktion.

Dadurch werden die Führungsbolzen gegen die Oberseite der Nut der Bodenschiene gedrückt. Nachteilig an einer derartigen Ausführungsform ist, dass die Fußplatte nicht mehr mit der Halteschiene zur Anlage kommt. Es besteht also ein Spalt zwischen Fußplatte und Boden.

Dies bedeutet, dass das von dem Stuhlfuß getragene Sitzgestell über ein gewisses Spiel verfügt. Ein weiterer Nachteil der Anordnung gemäß der EP 1 790 521 A1 ist, dass der Stuhlfuß und somit der Fahrzeugsitz nach oben, entgegen der Belastungsrichtung, verspannt wird. Das Gewicht des Fahrgastsitzes und das Gewicht des Fahrgastes wirken gegen die Spannkraft der federnden Platte und heben diese teilweise auf. Durch den Spalt zwischen Schiene und Bodenplatte wird keine formschlüssige Verbindung erreicht.

Aus der EP 0993392 A1 ist eine Vorrichtung für eine schnell lösbare, verschiebbare und schnell arretierbare Befestigung eines Fahrzeugausrüstungsteils bekannt geworden, bei dem wenigstens zwei Spannelemente durch Schräg- oder Keilflächen in Richtung der Bodenschiene gezogen werden, so dass eine Klemmwirkung verursacht wird. Zusätzlich zu den Spannelementen ist auch eine Positioniereinrichtung vorgesehen. Eine Ausgestaltung einer Vorrichtung mit der die Positioniereinrichtung zusammen mit den Spannelementen betätigt werden kann, ist in der EP 0993392A1 nicht angegeben. Die Positioniereinrichtung selbst wird durch ein Federelement gehalten.

Die Betätigungseinrichtung der EP 0 993 392 A1 wird durch eine Anordnung gemäß der DE 198 51 392A1 weitergebildet. Bei der Anordnung gemäß der DE 198 51 392A1 wird zur Betätigung wiederum ein durch Federn gehaltener Arretierbolzen eingesetzt, der über eine Kulissenscheibe und Steuerkurven die Klemmstifte ansteuert. Eine derartige Kulissensteuerung weist einen komplizierten und aufwendigen Aufbau auf. Die Klemmstifte gemäß der DE 198 51 392 A1 werden wiederum mit Federn gelagert. Zwar kann durch die Klemmstifte ein spielfreies Verspannen mit der Bodenschiene erreicht werden, jedoch handelt es sich um kein form- und kraftschlüssiges Anliegen der Klemmstifte an der Bodenschiene. Im Belastungsfall kann beispielsweise die Vorrichtung gegen die Federkraft der Federn angehoben werden, wodurch Klappergeräusche entstehen können. Des Weiteren werden zum spielfreien Verspannen eine Vielzahl von Spannbolzen benötigt.

Aus der EP 2 253 500 A2 ist eine Vorrichtung zum temporären Verbinden eines bewegbaren Gegenstandes mit einer Halteschiene bekannt geworden, bei der mittels einer Hebeleinrichtung, die einen Hebelarm umfasst, der um einen einzigen Drehpunkt verschwenkbar ist sowohl ein Arretierbolzen, wie ein Spannbolzen angelenkt wird, wobei der Arretierbolzen den Gegenstand arretiert und der Spannbolzen im Fall der Arretierung form- und kraftschlüssig an den Längsnuten der Halteschiene anliegt. Der Hebelarm gemäß der EP 2 253 500 A2 wirkt von Beginn an als zweiseitiger Hebel. Nachteilig an der Ausgestaltung gemäß der EP 2 253 500 A2 ist, dass die Arretierung und die Verspannung durch den um einen einzigen festen Drehpunkt drehbaren Hebel gleichzeitig erfolgen und durch die zu früh einsetzende Verspannung die Suchfunktion des Arretierbolzens eingeschränkt wird. Des Weiteren ist der Mechanismus schwergängig, da der Arretierbolzen durch die zu frühe Verspannung nicht exakt fluchtet, d. h. in das Loch der Halteschiene eingreift. Des Weiteren reibt der Arretierbolzen seitlich an der Halteschiene. Nachteilig an der EP 2 253 500 A2 ist zudem, dass der bewegbare Gegenstand, insbesondere der Fahrzeugsitz schon gegen die einsetzende Spannkraft in die Arretierstellung bewegt werden muss. Zwar ist aus der EP 2 258 500 A2 bekannt, dass mittels eines Fußhebels eine Arretierung der Vorrichtung vorgenommen oder gelöst werden kann, eine Einhandbedienung oder das Verschieben der Vorrichtung mit nur einer Hand ist dort aber nicht beschrieben. Zudem ergibt sich bei der Ausführung gemäß der EP 2 258 500 A2 das Problem, dass ein Passagier, z. B. mit dem Fuß, unbeabsichtigt eine Kraft schräg nach unten gegen die Nase des Schließbleches ausüben kann und sich dann die Verriegelung unbeabsichtigt lösen kann, was ein Sicherheitsproblem darstellt. Daher wird die Vorrichtung gemäß der EP 2 258 500 A2 mit einer Verriegelung durch einen "Druckknopf" ausgeführt, wie in der EP 2 258 500 A2 beschrieben.Auch die EP 1 892 142 A1 zeigt eine Vorrichtung mit einer aufwendigen Kulissensteuerung mit kompliziertem Aufbau sowie Federn am Arretierbolzen analog zum Aufbau wie in der DE 198 51 392 A1.

Eine weitere Schrift, die eine Einrichtung zum lösbaren Verbinden eines Sitzes zeigt, ist die DE 10 2005 023 007 B3. Anstelle eines Arretierbolzens wird bei der DE 10 2005 023 007 B3 ein Rastblech eingesetzt. Bei der DE 10 2005 023 007 B3 erfolgt die Verspannung wiederum mit Hilfe der Führungsbolzen, indem ein Verriegelbalken angehoben und abgesenkt wird.

Aus der DE 10 2017 215 659 A1 ist eine Vorrichtung zum zeitweiligen Verbinden eines bewegbaren Gegenstandes, insbesondere eines Fahrzeugsitzes mit einer Längsnuten aufweisenden Halteschiene, wobei die Vorrichtung wenigstens eine axial verschiebbare Arretiereinrichtung und wenigstens eine axial verschiebbare Spanneinrichtung, die in Abstand zur Arretiereinrichtung angeordnet ist, zum Eingriff in die Halteschiene aufweist und die Arretiereinrichtung und die Spanneinrichtung durch eine Hebeleinrichtung, insbesondere einen Hebelarm, gemeinsam axial verstellbar sind, bekannt geworden, die sich dadurch auszeichnet, dass die Hebeleinrichtung um einen ersten Drehpunkt als einseitiger Hebel und um einen zweiten Drehpunkt als zweiseitiger Hebel wirkt, wobei die Hebeleinrichtung um den ersten Drehpunkt eine Arretiervorrichtung und um den zweiten Drehpunkt eine Spanneinrichtung anlenkt derart, dass die Arretiereinrichtung und die Spanneinrichtung mit Hilfe des Hebelarmes in entgegen gesetzte Richtungen bewegt werden, so dass der Arretiervorgang abgeschlossen ist, bevor der Spannvorgang erfolgt. Zwar kann in der DE 10 2017 215 659 A1 ein Federriegel dazu eingesetzt werden, die Vorrichtung bspw. mit einem Fahrzeugsitz zu verriegeln oder zu entriegeln. Eine Verschiebung, die mit einer Hand erfolgen kann, bspw. nach dem Entriegeln oder gleichzeitig damit und damit eine schnellere Bedienbarkeit der Vorrichtung ist aus der DE 10 2017 215 659 A1 aber nicht bekannt geworden. Des weiteren lässt die Vorrichtung gemäß der DE 10 2017 215 659 A1 sich mit einer Hand verriegeln, beim Entriegeln muss jedoch mit einer Hand auf die Pedalplatte des Hebels gedrückt werden, um die Verspannkraft zu lösen und mit einer zweiten, weiteren Hand muss der Federriegel gezogen werden. Somit sind beim Entriegeln zwei Hände erforderlich. Zudem kann an dem Hebel aus der DE 10 2017 215 659 A1 nicht praktikabel verschoben werden, da er nicht als Griff ausgebildet ist und daher ziehen und schieben nicht ergonomisch erfolgen kann.

Problematisch bei allen Vorrichtungen gemäß dem Stand der Technik ist, dass das Bedienen der Vorrichtung immer mit zwei Händen erfolgen muss. Insbesondere kann mit dem Bedienhebel die Vorrichtung nicht ergonomisch entlang der Halteschiene nach dem Entriegeln verschoben werden.

Generell problematisch bei allen Vorrichtungen gemäß dem Stand der Technik ist, dass nicht alle Bedienfunktionen, nämlich Verriegeln, Entriegeln und Verschieben, mit einer Hand ausgeführt werden können. Dies ist für eine schnelle Bedienbarkeit der Vorrichtungen nachteilig.

Aufgabe der Erfindung ist es somit, die Nachteile des vorgenannten Standes der Technik zu vermeiden und eine einfache und schnell lösbare Anordnung anzugeben, mit dem eine sichere, schnelle und ergonomische Einhandbetätigung sowohl für Verriegeln wie Entriegeln und Verschieben der Vorrichtung insbesondere des Fahrzeugsitzes erreicht wird.

Erfindungsgemäß wird diese Aufgabe durch eine Vorrichtung gemäß Anspruch 1 gelöst.

Weiterbildungen der Erfindung sind Gegenstand von Unteransprüchen.

Die Vorrichtung zum zeitweiligen, d.h. zum temporären Verbinden eines bewegbaren Gegenstandes, insbesondere eines Fahrzeugsitzes, der auf einen Stuhlfuß montiert werden kann, mit einer Halteschiene umfasst eine axial verschiebbare Arretiervorrichtung und eine axial verschiebbare Spannvorrichtung im Abstand zur Arretiervorrichtung zum Eingriff in die Halteschiene. Die Arretiervorrichtung und die Spannvorrichtung sind durch eine Hebeleinrichtung gemeinsam axial verstellbar.

Erfindungsgemäß ist die Hebeleinrichtung derart ausgestaltet, dass im Gegensatz zum Stand der Technik die Hebelvorrichtung insbesondere zum Anheben und Absenken des bzw. der Arretiervorrichtung und der Spannvorrichtung mit einer Einhandbedienung vorgenommen werden kann. Durch die Hebelbewegung wird erreicht, dass die Arretiervorrichtung nach unten verbracht wird, bis die Arretierung in der Halteschiene erfolgt ist. Des Weiteren wird mit der Hebelvorrichtung erreicht, dass mit Hilfe der Spannvorrichtung nach Anheben eine Verspannung mit einer Halteschiene erfolgt. Hierfür kann mit Hilfe der Spannvorrichtung ein Verspannen in einer Oberseite einer Nut bspw. Halteschiene, insbesondere der Bodenschiene erfolgen.

Wenn die Spannvorrichtung bewegt wird, verspannt sie den bewegbaren Gegenstand in der Halteschiene. Um eine besonders feste Verspannung zu erreichen, kommt die Spannvorrichtung kraft- und formschlüssig mit einer T-förmigen Nut der Halteschiene zur Anlage.

Wie zuvor ausgeführt, ist die erfindungsgemäße Hebelvorrichtung derart ausgebildet, dass sie als Einhandhebelvorrichtung in eine Stellung verbracht werden kann, bei der die Arretiervorrichtung abgesenkt ist und die Spannvorrichtung kraft- und formschlüssig mit der Halteschiene verspannt wird. Des Weiteren kann die Vorrichtung mit der Einhandhebevorrichtung auch leicht entlang einer Halteschiene verschoben werden.

Um die Hebelvorrichtung mit Hilfe eines Rastelementes, insbesondere eines Hohlprofils mit einer Rastnase, in einer geöffneten oder geschlossenen Stellung zu halten und ein unbeabsichtigtes Betätigen der Hebelvorrichtung zu verhindern, kann vorgesehen sein, die Hebelvorrichtung mit Hilfe eines Federelementes, insbesondere zum Verriegeln und Entriegeln des Rastelementes, zu versehen. Um die Betätigung der Hebelvorrichtung nicht nur am Boden auszulösen ist in einer fortgebildeten Ausführungsform vorgesehen, dass die Betätigung der Hebelvorrichtung vom Boden nach oben bspw. an die Stuhlfußoberkante verlegt wird. Dies ist möglich, wenn die Hebelvorrichtung als Hebelgestänge ausgebildet ist und z. B. aus einem Arretierhebel und einer Hebelstange besteht.

Der Arretierhebel ist mit dem Hebelgestänge gelenkig verbunden, so dass, wenn der Arretierhebel um den Drehpunkt gedreht wird, die Arretiervorrichtung und die Spannvorrichtung angehoben und/oder abgesenkt werden.

Um für die Hebelvorrichtung eine Selbsthemmung zur Verfügung zu stellen kann vorgesehen sein, dass der bewegbare Gegenstand, bspw. der Stuhlfuß mit Sitz, ein Hohlprofil umfasst und die Hebelstange und der Arretierhebel werden im Hohlprofil bewegt. Wenn der Arretierhebel dann um den Drehpunkt gedreht wird, schlägt die Hebelstange, die sich um ein Gelenk dreht, an der Innenseite des Hohlprofils des Stuhlfußes an. Besonders bevorzugt ist es, wenn der Anschlag so gewählt ist, dass dieser sich hinter dem unteren Totpunkt befindet. Dann tritt eine Selbsthemmung ein.

Um eine leichte Verschiebbarkeit des bspw. Stuhlfußes entlang der Halteschiene zur Verfügung zu stellen ist in einer ersten Ausführungsform der Erfindung vorgesehen, dass ein Arretierprofil der Vorrichtung, auf dem der Stuhlfuß angeordnet ist, Rollen aufweist. Die Rollen ersetzen die bei den Vorrichtungen gemäß dem Stand der Technik, wie bspw. der Vorrichtung gemäß der EP 2 253 500 A2 oder DE 10 2017 215 659 A1, eingesetzten Gleitelemente.

Die Verwendung von Rollen hat die Beweglichkeit des Arretierprofils und damit des Stuhlfußes in der Halteschiene wesentlich gegenüber Gleitelementen vereinfacht und die Kraft, die aufgewandt werden muss, um das Arretierprofil entlang der Halteschiene zu verschieben minimiert.

Um das Arretierprofil, das mit dem Stuhlfuß verbunden ist, möglichst einfach und passgenau mit den Führungsbolzen in die Halteschiene, insbesondere die Löcher der Halteschiene, einsetzen zu können, kann die Vorrichtung eine Lagemarkierungsvorrichtung umfassen, die den Ort der Löcher in der Halteschiene markiert. Besonders bevorzugt ist es, wenn die Lagemarkierungselemente insbesondere aus Kunststoff, bevorzugt Polyamid, bestehen und gleichzeitig als Gleitelement fungieren können.

In einer besonders vorteilhaften Ausführungsform der Erfindung ist die Vorrichtung derart ausgestaltet, dass im Fall der Verspannung die Spannvorrichtung form- und kraftschlüssig an der Halteschiene anliegt. Insbesondere wird in einer bevorzugten Ausführungsform die Vorrichtung mit Hilfe der Arretiervorrichtung in der Halteschiene arretiert und mit Hilfe der Spannvorrichtung in der Halteschiene verspannt.

Nachfolgend soll die Erfindung ohne Beschränkung hierauf anhand der Figuren beschrieben werden.

Es zeigen:
- Fig. 1a:: eine erfindungsgemäße Vorrichtung zum zeitweiligen Verbinden eines bewegbaren Gegenstandes mit einer Hebelvorrichtung für Einhandbedienung am Boden und Auslösung unten.
- Fig. 1b:: Detailansicht der Hebelvorrichtung gemäß Fig. 1a in entriegelter Stellung
- Fig. 1c:: Detailansicht einer Hebelvorrichtung gemäß Fig. 1a in einer Zwischenstellung mit betätigtem Rastelement, d. h. das Rastelement liegt nicht an.
- Fig. 2a:: erfindungsgemäße Vorrichtung zum zeitweiligen Verbinden eines bewegbaren Gegenstandes mit einer Hebelvorrichtung für Einhandbedienung am Boden und Auslösung unten in verriegelter Stellung
- Fig. 2b:: Detailansicht einer Hebelvorrichtung gemäß Fig. 2a in verriegelter Stellung
- Fig. 3a:: Ansicht eines Einhandhebels für Auslösung unten
- Fig. 3b:: Einhandhebel für Auslösung unten mit einem Hebelgestänge
- Fig. 4a:: Vorrichtung zum zeitweiligen Verbinden eines bewegbaren Gegenstandes mit einer Hebelvorrichtung für Einhandbedienung im oberen Teil der Vorrichtung und damit Auslösung oben und Stellung entriegelt
- Fig. 4b:: Detailansicht der Vorrichtung gemäß Fig. 4a in verriegelter Stellung
- Fig. 4c:: Detailansicht der Vorrichtung gemäß Fig. 4a in verriegelter Stellung mit Ansicht des Hebels umfassend einen Arretierhebel und eine Hebelstange in verriegelter Stellung an der Innenseite des Hohlprofils anliegend
- Fig. 5a:: erfindungsgemäße Vorrichtung mit Halteschiene und Lagemarkierungsgleiter in Entnahmeposition
- Fig. 5b:: erfindungsgemäße Vorrichtung mit Halteschiene und Lagemarkierungsgleiter in Verriegelungsposition

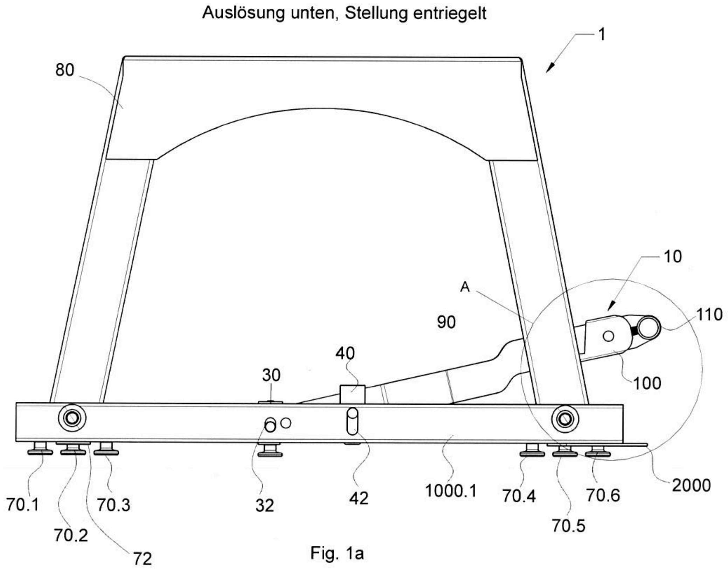

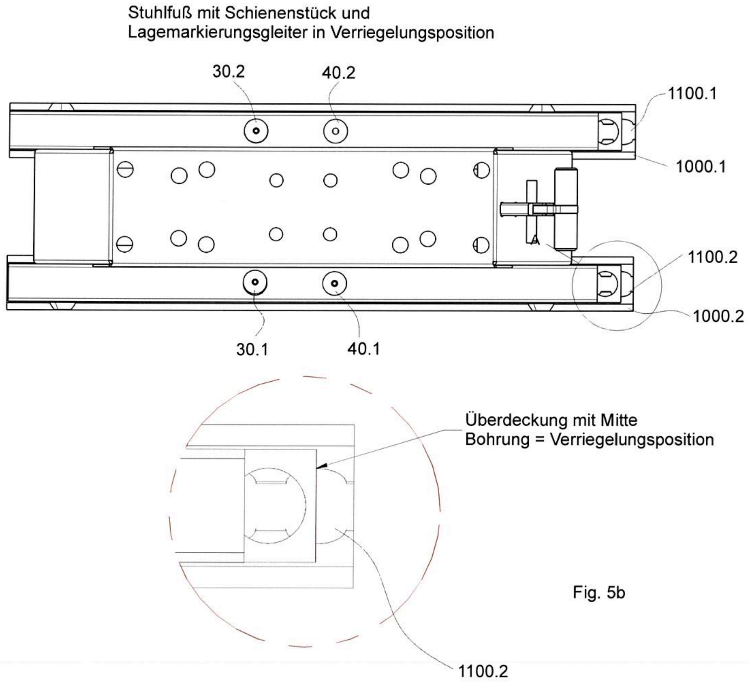

Figur 1a zeigt eine erfindungsgemäße Vorrichtung 1, hier insbesondere einen Stuhlfuß, bevorzugt aus einem Hohlprofil, auf dem ein Sitz, bspw. eines Fahrzeuges, angeordnet wird mit einer Hebeleinrichtung bzw. Hebelvorrichtung mit Hebelarm 10 zum Betätigen zum einen der Arretiervorrichtung 40 und der Spannvorrichtung 30. Bei der Arretiervorrichtung 40 handelt es sich bei der in Figur 1a gezeigten Vorrichtung um einen Arretierbolzen und bei der Spannvorrichtung 30 um einen Spannbolzen, die beide durch den Hebelarm 10 im Rahmen einer Einhandbedienung betätigt werden können. Erfindungsgemäß ist vorgesehen, dass die Betätigung des Hebelarms 10, der in der vorliegenden Ausführungsform am Boden, d. h. an der Halteschiene 1000.1, 1000.2 (siehe Fig. 5b) der Vorrichtung angeordnet ist, angehoben bzw. abgesenkt werden kann. Die Führung sowohl der Arretiervorrichtung 40 wie auch der Spannvorrichtung 30 erfolgt durch Anheben bzw. Absenken des Hebels 10 entlang der Langlöcher 32 für die Spannvorrichtung 30 und 42 für die Arretiervorrichtung 40.

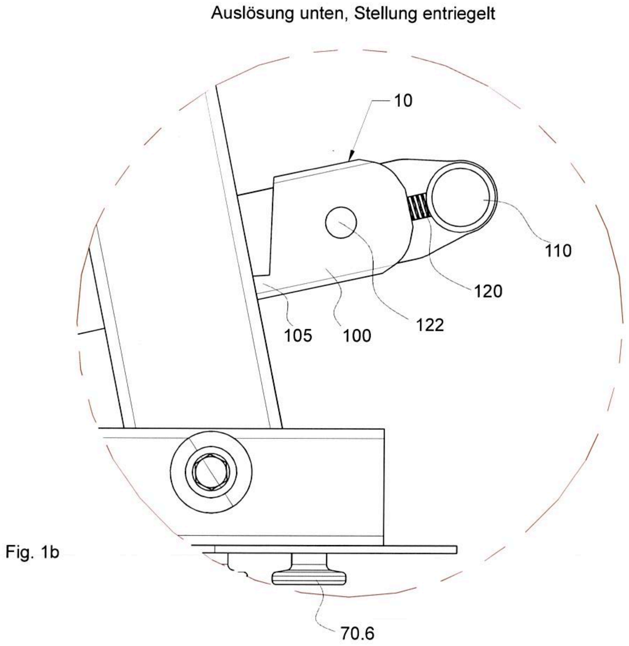

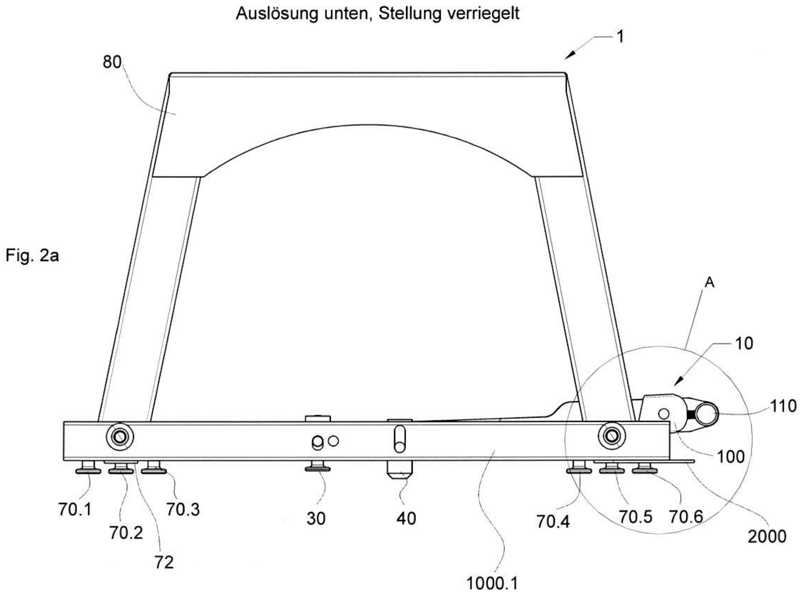

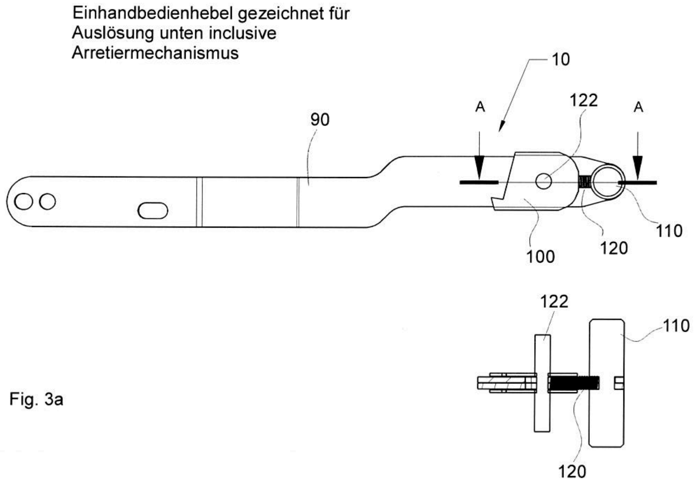

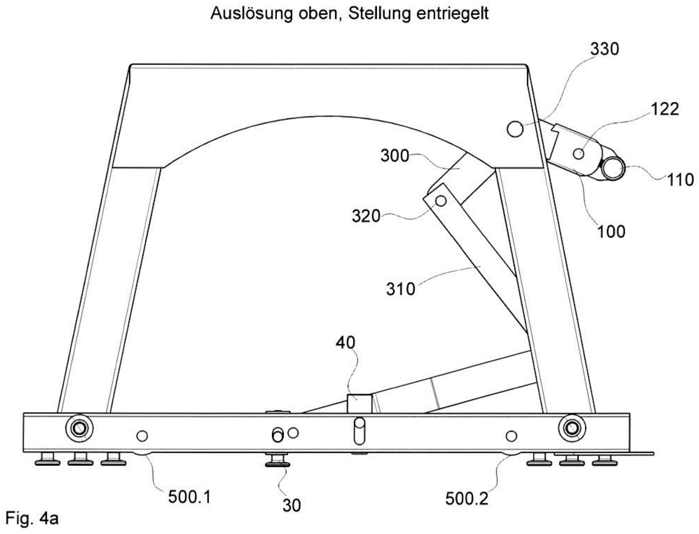

In der Halteschiene 1000.1 (siehe Fig. 5b) kann die Vorrichtung entlang derselben mit Hilfe von insgesamt 6 Führungsbolzen 70.1, 70.2, 70.3, 70.4, 70.5, 70.6 geführt werden. Um das Gleiten der Vorrichtung in der Führungsschiene zu unterstützen, sind in der Ausführungsform in Fig. 1a und Fig. 2a am Führungsbolzen 70.2 Gleitelemente 72, die bspw. einen Kunststoff, bspw. ein Polyamid-Material umfassen können, vorgesehen. Das Gleiten der Vorrichtung wird auch durch das am Ende der Halteschiene angebrachte Lageelement bzw. Lagemarkierungselement 2000 unterstützt. Auch das Lageelement bzw. Lagemarkierungselement kann aus einem Kunststoffmaterial, bspw. Polyamid, bestehen. Anstelle der Gleitelemente 72 können Rollen 500.1, 500.2, wie in Fig. 4a gezeigt, vorgesehen sein. Der Gegenstand, insbesondere der Fahrzeugsitz, wird auf dem Stuhlfuß bzw. Aufbau 80 angeordnet. Die Hebelvorrichtung mit Hebelarm 10 umfasst ein Hebelgestänge 90 und ein Rastelement 100, das vorliegend in Form als Rastnase ausgebildet ist. Die Rastnase wird durch Ziehen des Betätigungsgriffes 122 (in Fig. 3a dargestellt) entriegelt. Wie in Figur 1b dargestellt, wirkt eine Feder auf das Rastelement mit Rastnase und kann dann, wie in Figur 2a dargestellt, dieses betätigen, so dass der Einhandhebel verrastet wird und so ein unbeabsichtigtes Entriegeln der Vorrichtung verhindert wird. Sobald sich der Hebel in der unteren Verriegelungsposition befindet, rastet durch die Feder die Rastnase selbstständig ein.

In Figur 1b dargestellt ist eine Detailansicht der Hebelvorrichtung mit Hebelarm 10 mit einem durch die Feder 120 und den Betätigungsgriff 122 entriegelten Rastelement 100, wobei das Rastelement nach hinten gezogen wird, so dass die Rastnase 105 entrastet wird. Gleiche Bauteile wie in Figur 1a sind mit denselben Bezugsziffern belegt.

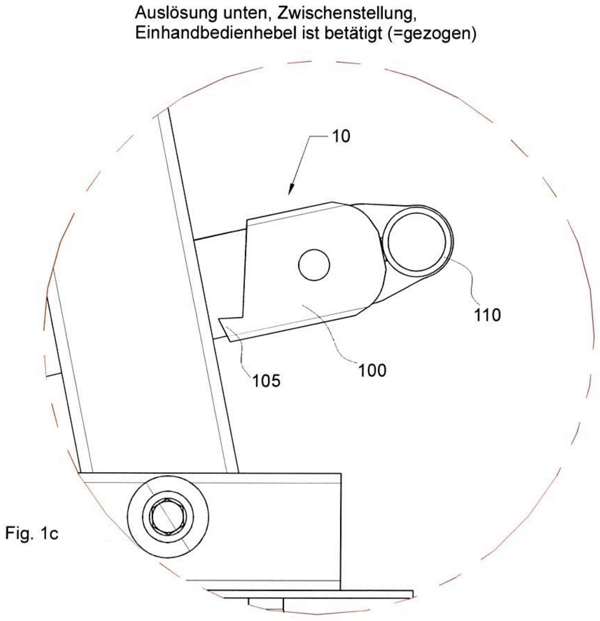

Figur 1c zeigt die Stellung des Rastelementes 100 in einer zurückgezogenen Stellung, mit der das Rastelement 100 mit Rastnase 105 entriegelt ist und damit der Hebel 10 nach oben angehoben bzw. abgesenkt werden kann. Dies ist gemäß Figur 1 c mit einer Einhandbedienung möglich. Wenn die Rastnase 105 sich in der in Figur 1a dargestellten Stellung (entriegelt) befindet, kann die gesamte Vorrichtung, insbesondere der Stuhlfuß, zum zeitweiligen Verbinden eines bewegbaren Gegenstandes aus den Halteschienen (nicht dargestellt) entnommen werden.

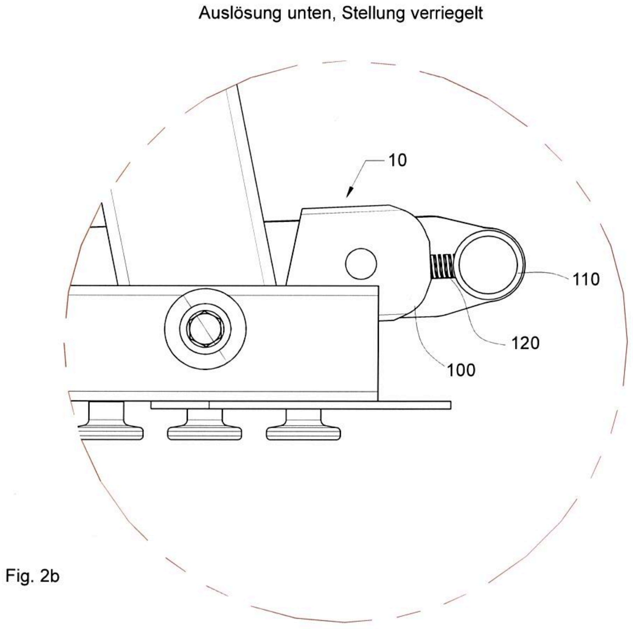

Figur 2a zeigt eine erfindungsgemäße Vorrichtung mit einer Hebelvorrichtung für Einhandbedienung, die am Boden angeordnet ist, in verriegelter Stellung, d. h., die Spannvorrichtung 30 ist angehoben und mit der Halteschiene 1000.1 verspannt und die Arretiervorrichtung 40 zur Arretierung der Vorrichtung in die nicht dargestellte Halteschiene abgesenkt. Gleiche Bauteile wie in Figur 1a tragen in Figur 2a dieselben Bezugsziffern. Deutlich zu erkennen ist der Hebel 10 am Boden zum Anheben und/oder Absenken der Hebelvorrichtung, die dann die Spannvorrichtung 30 und die Arretiervorrichtung 40 in die gewünschten Positionen bewegt mit Hilfe einer Einhandbedienung. Ebenfalls zu erkennen ist das Rastelement 100 in Verriegelungsstellung, wie im Detail auch in Figur 2b dargestellt. Insbesondere in der Verriegelungsstellung greift die Rastnase in eine vorgesehene Aussparung (nicht dargestellt) ein und verriegelt dadurch den Stuhlfuß. Ebenfalls in Fig. 2a dargestellt sind die Führungsbolzen 70.1, 70.2, 70.3, 70.4, 70.5, 70.6 und das Gleitelement 72 sowie das Lageelement bzw. Lagemarkierungselement 2000.

Figur 2b zeigt detailliert den Hebel bzw. Hebelarm 10 mit Rastelement 100 in verriegelter Stellung, d. h. in einer Stellung, die ein Entnehmen der Vorrichtung zum zeitweiligen Verbinden verhindert.

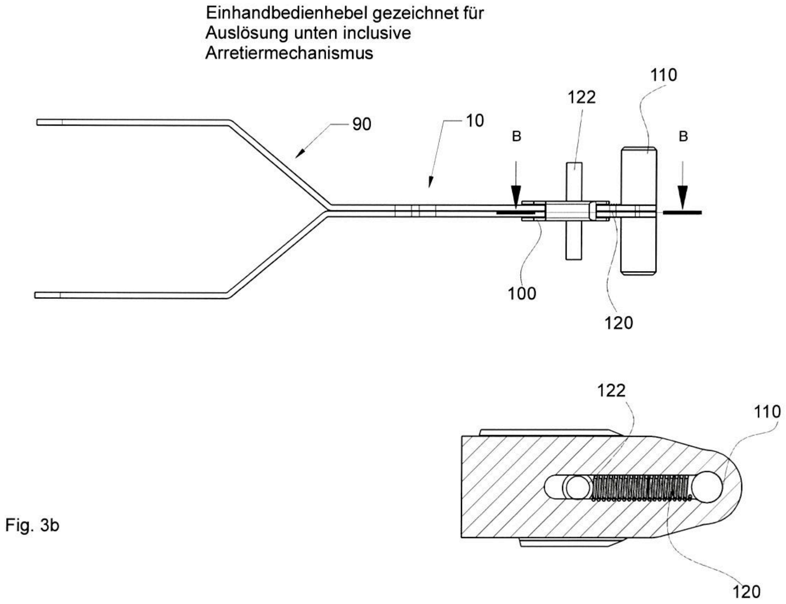

Figur 3a und 3b zeigen Detailansichten eines Hebelgestänges des Hebels bzw. Hebelarms 10 zur Einhandbedienung, wie in den Figuren 2a und 2b verwendet für eine Auslösung unten. In Figur 3a sind gleiche Bauteile wie in den Figuren 2a - 2b mit gleichen Bezugsziffern gekennzeichnet. In Figur 3a ist eine Seitenansicht eines Hebels bzw. Hebelarms 10 umfassend ein Hebelgestänge 90 dargestellt. In Figur 3a deutlich zu sehen ist das Rastelement 100 und der Betätigungsgriff 122 zur Betätigung der Feder 120. Der Betätigungsgriff 122 betätigt die Feder 120. Eine Draufsicht auf den Hebel 110 mit der Feder 120 ist im unteren Abschnitt des Bildes Figur 3a dargestellt. Wie die Draufsicht zeigt, kann der Betätigungsgriff 122 leicht gegen die Federkraft der Feder 120 zum Hebel 110 hin mit einer Hand gezogen werden. Dies ermöglicht bevorzugt die Einhandbetätigung.

In Figur 3b ist wiederrum eine Ansicht des Hebelgestänges 90 umfassend den Hebel bzw. Hebelarm 10 mit Rastelement 100 dargestellt. Gleiche Bauteile wie in Figur 3a sind mit denselben Bezugsziffern belegt. Insbesondere sind in Fig. 3b auch der Betätigungsgriff 122 und der Hebel 110 gezeigt, ebenso wie die Feder 120.

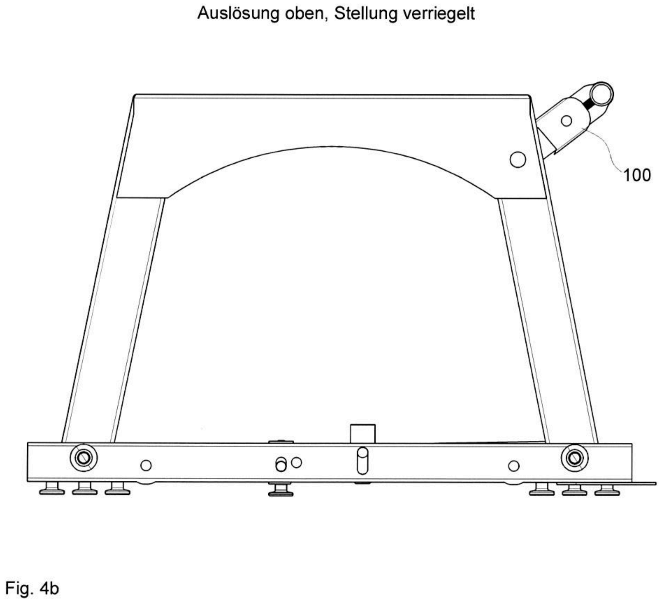

In Figur 4a ist eine alternative Ausgestaltung eines erfindungsgemäßen Hebels zur Einhandbedienung dargestellt. Im Gegensatz zu den zuvor beschriebenen Ausführungsformen, die einen Einhandhebel am Boden oder zum Boden der Vorrichtung hin zeigen, ist bei dem Hebel gemäß den Figuren 4a - 4c der Hebel zur Bedienung vom Boden weg nach oben in den Bereich, in den auf dem Stuhlfuß des Fahrzeugsitzes aufliegt, verlegt. Dieser ermöglicht eine ergonomische Bedienung und das sich ein Bediener zur Betätigung weniger stark bücken muss, wie für den Fall, wenn die Betätigung am Boden erfolgt. Der erfindungsgemäße Hebel umfasst mehrere Teile, so einen Arretierhebel 300 und eine Hebelstange 310, die über ein Gelenk 320 mit dem Arretierhebel verbunden ist. Die Arretiervorrichtung ist mit Bezugsziffer 30 bezeichnet und die Spannvorrichtung mit der Bezugsziffer 40. Die erfindungsgemäße Vorrichtung gemäß Figur 4a weist ebenfalls ein Rastelement 100 mit Rastnase auf. Die Auslösung der Rastnase erfolgt wiederrum über den Betätigungsgriff 122, wie schon in Figur 2a und 2b. Gleiche Bauteile wie in den vorangegangenen Figuren sind mit denselben Bezugsziffern belegt. In Figur 4a dargestellt sind zur einfachen Bewegung der Vorrichtung bzw. des Stuhlfußes entlang der Halteschiene statt der bislang verwandten Gleitelemente bzw. Gleitscheiben zwei Rollen 501, 502, mit deren Hilfe die Vorrichtung in der Halteschiene 1000.1, 1000.2 verschoben werden kann, wenn sich Arretierprofil und Spannvorrichtung, wie in Figur 4a dargestellt, in der entriegelten Stellung befinden. Die verriegelte Stellung mit Hilfe eines Hebelgestänges ist in Figur 4b dargestellt, gleiche Bauteile wie in Figur 4a sind mit denselben Bezugsziffern belegt.

In Figur 4b ist die Vorrichtung in der verriegelten Stellung gezeigt. In dieser Position greift die Rastnase der Rastvorrichtung in das Profil des Stuhlfußes ein und verriegelt den Hebel in der oberen Stellung. Wiederrum dargestellt sind in Figur 4b die Arretier- und die Spannvorrichtung sowie die Rollen 500.1, 500.2, die dazu dienen, die Vorrichtung entlang einer Schiene, insbesondere der Halteschiene, leichter als mit Gleitelementen verschieben zu können.

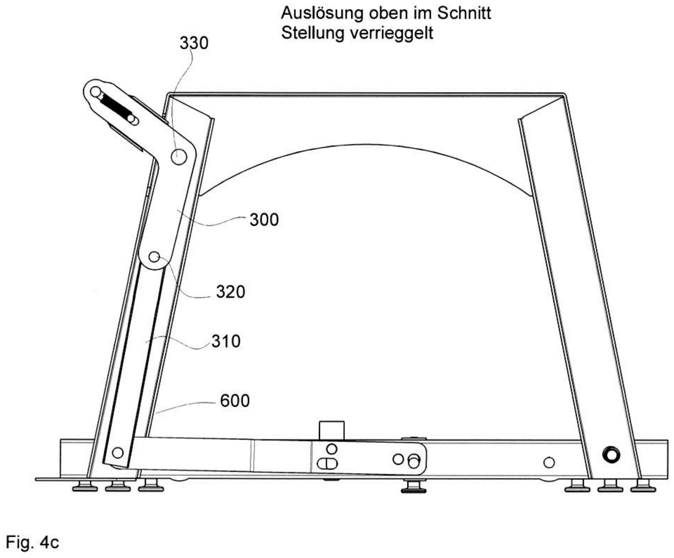

In Figur 4c dargestellt ist der Hebel bestehend aus Arretierhebel 300 und Hebelstange 310, wobei durch das Drehen des Arretierhebels um den Drehpunkt 330 die Spannvorrichtung 30 angehoben und die Arretiervorrichtung 40 abgesenkt wird. Deutlich zu erkennen ist der Verlauf des erfindungsgemäßen Arretierhebels 300 innerhalb des Hohlprofils 600 des Stuhlfußes und damit des Aufbaus für die Sitzeinrichtung. Wie aus Figur 4c zu entnehmen ist, schlägt der Arretierhebel 300 an der Innenseite des Hohlprofils des Stuhlfuß-Oberteils an, nachdem er um den Drehpunkt 330 über UT des Gestänges gedreht hat und hierdurch eine Selbsthemmung erreicht wird.

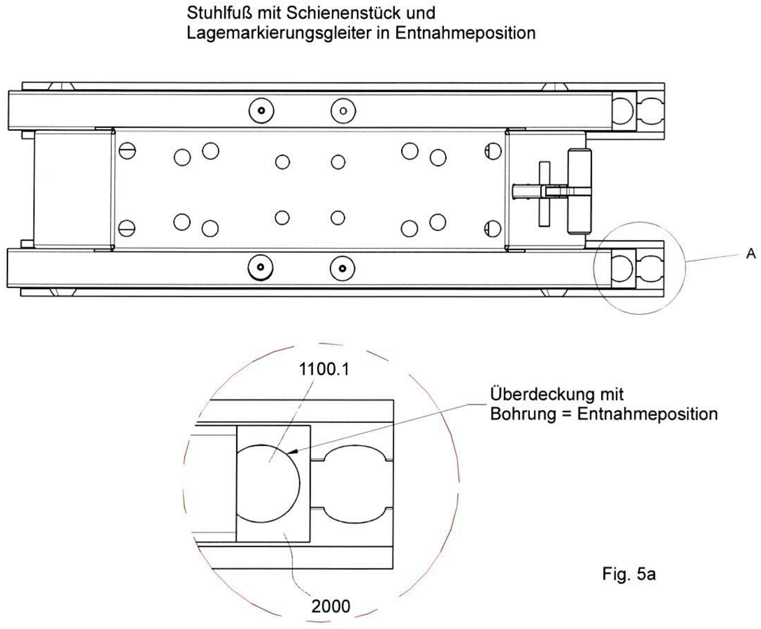

Figur 5a und 5b zeigen eine erfindungsgemäße Vorrichtung in Form eines Stuhlfußes, bspw. für einen Sitz, mit zwei Halteschienen 1000.1, 1000.2. Die Halteschienen 1000.1, 1000.2 weisen insbesondere mehrere Bohrungen 1100.1, 1100.2 auf. In diese Bohrungen werden die Spannvorrichtungen 30.1, 30.2 und die Führungsbolzen eingesetzt. Bei der in Figur 5a gezeigten Stellung des Stuhlfußes handelt es sich um eine sogenannte Entnahmeposition des Stuhlfußes aus der Halteschiene. Um diese Position anzuzeigen ist ein Lagemarkierungsgleiter 2000, bevorzugt aus einem Kunststoff, bspw. einem Polyamid-Material, vorgesehen, der in der Entnahmestellung eine Überdeckung mit wenigstens einer Bohrung 1100.1 zeigt. Figur 5b zeigt im Gegensatz zur Entnahmeposition eine Verriegelungsposition des Stuhlfußes in den Halteschienen 1000.1, 1000.2. Hier findet eine Überdeckung des Lagemarkierungsgleiters 2000 mit der Mitte der Bohrung 1100.1 statt. Mit Hilfe des Lagemarkierungsgleiters 2000 ist es auf einfache Art und Weise möglich zu erkennen, ob sich der Stuhlfuß in einer Entnahmelage, d. h. über eine Bohrung der Halteschienen 1000.1, 1000.2, oder in einer Verriegelungsposition über der Mitte einer Bohrung der Halteschienen 1000.1, 1000.2 befindet. Dies hat den Vorteil, dass der Stuhlfuß schon in die gewünschte Position im entriegelten Zustand geschoben werden kann. Eine Betätigung funktioniert dann sofort. Eine gewünschte Position muss nicht mehr gesucht werden. Dies vereinfacht die Betätigung der Verriegelung und insbesondere das Herausnehmen des Fahrzeugsitzes aus den Halteschienen 1000.1, 1000.2.

Mit der Erfindung wird erstmals eine Möglichkeit zum Verriegeln und Entriegeln und Verschieben einer Vorrichtung zum zeitweiligen Verbinden eines bewegbaren Gegenstandes mit Hilfe einer Hebeleinrichtung bzw. Hebelvorrichtung bzw. eines Hebelarms im Rahmen einer Einhandbedienung angegeben, d. h. mit nur einer Hand kann die Vorrichtung verriegelt und entriegelt und verschoben werden.

## Patentansprüche

1. Vorrichtung zum zeitweiligen Verbinden eines bewegbaren Gegenstandes, insbesondere eines Fahrzeugsitzes mit Längsnuten aufweisenden Halteschienen (1000.1, 1000.2) wobei die Vorrichtung wenigstens eine axial verschiebbare Arretiervorrichtung (40) und wenigstens eine axial verschiebbare Spannvorrichtung (30), die in Abstand zur Arretiervorrichtung (40) angeordnet ist, zum Eingriff in die Halteschienen (1000.1, 1000.2) aufweist und die Arretiervorrichtung (40) und die Spannvorrichtung (30) durch eine Hebeleinrichtung , insbesondere einen Hebelarm (10) gemeinsam axial verstellbar sind,
**dadurch gekennzeichnet, dass**
die Hebeleinrichtung derart ausgestaltet ist,
dass diese mit einer Einhandbedienung verriegelt und/oder entriegelt und/oder verschoben werden kann.

2. Vorrichtung nach Anspruch 1,
**dadurch gekennzeichnet, dass**
die Hebeleinrichtung derart ausgestaltet ist, dass diese mit Einhandbedienung verriegelt und entriegelt und verschoben werden kann.

3. Vorrichtung nach Anspruch 2,
**dadurch gekennzeichnet, dass**
das Entriegeln, Verschieben und erneutes Verriegeln in einer Operation mit einer Hand durchgeführt werden kann, wobei während der ganzen Operation die Hand am Griff des Hebelarms verbleiben kann.

4. Vorrichtung nach einem der Ansprüche 2 bis 3,
**dadurch gekennzeichnet, dass**
der Hebel T-förmig ausgestaltet ist und durch ein ergonomisches Ziehen und Drücken am Hebel ein bedienerfreundliches Verschieben der Vorrichtung erreicht wird.

5. Vorrichtung nach einem der Ansprüche 1 bis 4,
**dadurch gekennzeichnet, dass**
die Hebeleinrichtung ein Rastelement, insbesondere ein Hohlprofil mit einer Rastnase, umfasst.

6. Vorrichtung nach einem der Ansprüche 1 bis 5,
**dadurch gekennzeichnet, dass**
die Hebeleinrichtung eine Feder (120) zum Entriegeln und Verriegeln der Hebeleinrichtung, bevorzugt mit Hilfe des Rastelementes (100), insbesondere der Rastnase, umfasst.

7. Vorrichtung nach einem der Ansprüche 1 bis 6,
**dadurch gekennzeichnet, dass**
die Hebeleinrichtung ein Hebelgestänge umfasst, bestehend aus einem Arretierhebel (300) und einer Hebelstange (310).

8. Vorrichtung nach Anspruch 7,
**dadurch gekennzeichnet, dass**
der Arretierhebel (300) über einen Drehpunkt (330) dreht, so dass die Arretiervorrichtung (40) und die Spannvorrichtung (30) angehoben und/oder abgesenkt wird.

9. Vorrichtung nach einem der Ansprüche 1 bis 8,
**dadurch gekennzeichnet, dass**
der bewegbare Gegenstand ein Hohlprofil (600) umfasst und der Arretierhebel (300) im Hohlprofil (600) bewegt wird und wenn der Arretierhebel (300) um den Drehpunkt (330) über UT gedreht wird, er an der Innenseite des Hohlprofils (600) anschlägt, so dass eine Selbsthemmung eintritt.

10. Vorrichtung nach einem der Ansprüche 1 bis 9,
**dadurch gekennzeichnet, dass**
die Vorrichtung ein Arretierprofil umfasst, das Rollen (501, 502) aufweist.

11. Vorrichtung nach einem der Ansprüche 1 bis 10,
**dadurch gekennzeichnet, dass**
die Vorrichtung mindestens einen Lagemarkierungsgleiter (2000), insbesondere ein Lagemarkierungsgleiter (2000), insbesondere aus Kunststoff, bevorzugt Polyamid, umfasst.

12. Vorrichtung nach einem der Ansprüche 1 bis 11,
**dadurch gekennzeichnet, dass**
die Vorrichtung derart ausgestaltet ist, dass im Fall der Verspannung die Spannvorrichtung (30) form- und kraftschlüssig an den Halteschienen (1000.1, 1000.2) anliegt.

13. Vorrichtung nach einem der Ansprüche 1 bis 12,
**dadurch gekennzeichnet, dass**
die Vorrichtung ein Arretierprofil umfasst, das mit Hilfe der Arretiervorrichtung (40) in den Halteschienen (1000.1, 1000.2) arretiert und mit Hilfe der Spannvorrichtung (30) in den Halteschienen (1000.1, 1000.2) verspannt wird.
